# DEMANDE DE BREVET EUROPEEN

(11) **EP 0 999 497 A1**
(43) Date de publication de la demande: **10.05.2000**
(21) Numéro de dépôt: 99402726.6
(22) Date de dépôt: 03.11.1999
(51) Int. Cl.: G06F 9/38, G06F 15/78

(54) **Séquenceur d'actions synchrones dans un système à processeur et circuit intégré comportant un tel séquenceur**

(30) Priorité: 04.11.1998 FR 9813854
(71) Demandeur: Matra Nortel Communications, 29100 Quimper (FR)
(72) Inventeur: Bourdillat, Jean-Pierre, 92350 Le Plessis Robinson (FR); Richy, Michel, 78990 Elancourt (FR)
(74) Mandataire: Loisel, Bertrand

(57) **Abrégé**

Pour déclencher des actions synchrones avec une horloge système dans un système électronique comprenant un processeur de gestion, une mémoire de programme et des unités périphériques, le séquenceur (14) comprend : un registre d'instruction (18) comportant un champ de date (19) pour contenir une date d'exécution d'instruction, un champ de code d'instruction (20) et un champ de données (21); des moyens (25-28) pour charger le registre d'instruction depuis la mémoire de programme par un canal DMA: un comparateur (22) recevant d'une part une date courante obtenue à partir de l'horloge système et d'autre part la date d'exécution contenue dans le champ de date du registre d'instruction ; et une logique de commande (23) pour décoder les contenus des champs de code d'instruction et de données du registre d'instruction et déclencher au niveau des unités périphériques, sans intervention du processeur de gestion, les actions déduites de ce décodage au moment où le comparateur montre que la date d'exécution est atteinte par la date courante.

## Description

La présente invention concerne les systèmes électroniques contrôlés par des processeurs et requérant un certain nombre d'actions synchrones avec une horloge système.

Lorsque de telles actions doivent être déclenchées à un rythme très élevé ou à des instants très précis, les temps de réponse des processeurs peuvent devenir incompatibles.

L'invention trouve une application particulière dans des terminaux de radiocommunication numérique. Le processeur a à gérer un certain nombre de tâches à faibles contraintes de temps réel, par exemple ce qui concerne l'interface utilisateur. D'autres fonctions du terminal requièrent des actions rapides déclenchées à des instants très précis, par exemple ce qui concerne le traitement de signal et la commande de l'interface radio.

Dans ce genre d'applications, une possibilité est d'utiliser une base de temps matérielle qui signale périodiquement au processeur les moments de déclenchement d'actions datées. Le processeur est alors souvent sollicité, ce qui diminue ses performances en consommation et en puissance de calcul.

Cela complique également la gestion et la mise au point du logiciel.

Une autre possibilité est d'utiliser deux processeurs, à savoir un microprocesseur/microcontrôleur standard pour la gestion, qui prend essentiellement en charge les événements asynchrones lents (gestion du clavier-afficheur, interface système...), et un processeur de traitement de signal couplé à une base de temps pour la gestion des événements synchrones ou datés.

Un but de la présente invention est de proposer une nouvelle architecture qui simplifie la gestion des événements synchrones dans un tel système.

L'invention propose ainsi un séquenceur pour déclencher des actions synchrones avec une horloge système dans un système électronique comprenant un processeur de gestion, une mémoire de programme et des unités périphériques. Ce séquenceur comprend: un registre d'instruction comportant un champ de date pour contenir une date d'exécution d'instruction, un champ de code d'instruction et un champ de données ; des moyens pour charger le registre d'instruction depuis la mémoire de programme par un canal DMA : un comparateur recevant d'une part une date courante obtenue à partir de l'horloge système et d'autre part la date d'exécution contenue dans le champ de date du registre d'instruction ; et une logique de commande pour décoder les contenus des champs de code d'instruction et de données du registre d'instruction et déclencher au niveau des unités périphériques, sans intervention du processeur de gestion, les actions déduites de ce décodage au moment où le comparateur montre que la date d'exécution est atteinte par la date courante.

Les actions synchrones à forte contrainte de temps réel sont laissées à la charge du séquenceur, ce qui libère le processeur d'actions consommatrices de temps CPU pour le laisser se consacrer à des tâches de niveau supérieur ou le laisser en veille afin de réaliser des économies de consommation. Elles facilitent l'utilisation de logiciels de gestion multitâches, ou OS (Operating system) temps réel, par la diminution du rythme des interruptions. Le séquenceur fait alors office « d'OS temps réel matériel ».

Le séquenceur simplifie également la gestion de la veille système. Associé à une base de temps synchrone et synchronisable, il réalise des actions synchronisées au niveau système.

Le partage des ressources périphériques par le processeur et par le séquenceur apporte de la souplesse dans la spécification, la réalisation, le test, et l'utilisation des périphériques associés au séquenceur et au processeur.

Le séquenceur comprend de préférence un registre de commande accessible par le processeur de gestion pour contenir des commandes d'initialisation du fonctionnement du séquenceur. Après cette initialisation, le déroulement du programme du séquenceur est incrémental. Le registre de commande peut en outre avoir des emplacements contenant des informations sur l'état du séquenceur.

Les moyens de chargement du registre d'instruction comprennent avantageusement un registre d'adresse de base accessible en écriture par le processeur, un compteur d'adresse incrémentale piloté par la logique de commande, un sommateur recevant l'adresse de base et de l'adresse incrémentable, et un contrôleur de mode DMA pour charger le registre d'instruction avec une instruction datée lue dans la mémoire de programme à une adresse délivrée par le sommateur.

Différents programmes peuvent ainsi être établis à l'avance, l'appel de ces programmes étant spécifié par le processeur fournissant l'adresse de base.

Un autre aspect de la présente invention se rapporte à un circuit intégré, comprenant un processeur de gestion, une mémoire de programme, des unités périphériques, des moyens d'obtention d'une horloge système, et un séquenceur tel que défini ci-dessus, pour déclencher des actions synchrones avec l'horloge système au niveau des unités périphériques.

La réalisation d'un tel circuit intégré en silicium dans une application de radiocommunication a montré que l'augmentation de surface du circuit due à la présence du séquenceur selon l'invention restait limitée (moins de 2%).

D'autres particularités et avantages de la présente invention apparaîtront dans la description ci-après d'exemples de réalisation non limitatifs, en référence aux dessins annexés, dans lesquels :
- la figure 1 est un schéma synoptique de la partie logique d'un terminal de radiocommunication mettant en oeuvre la présente invention ;
- la figure 2 est un schéma synoptique d'un séquenceur selon l'invention.

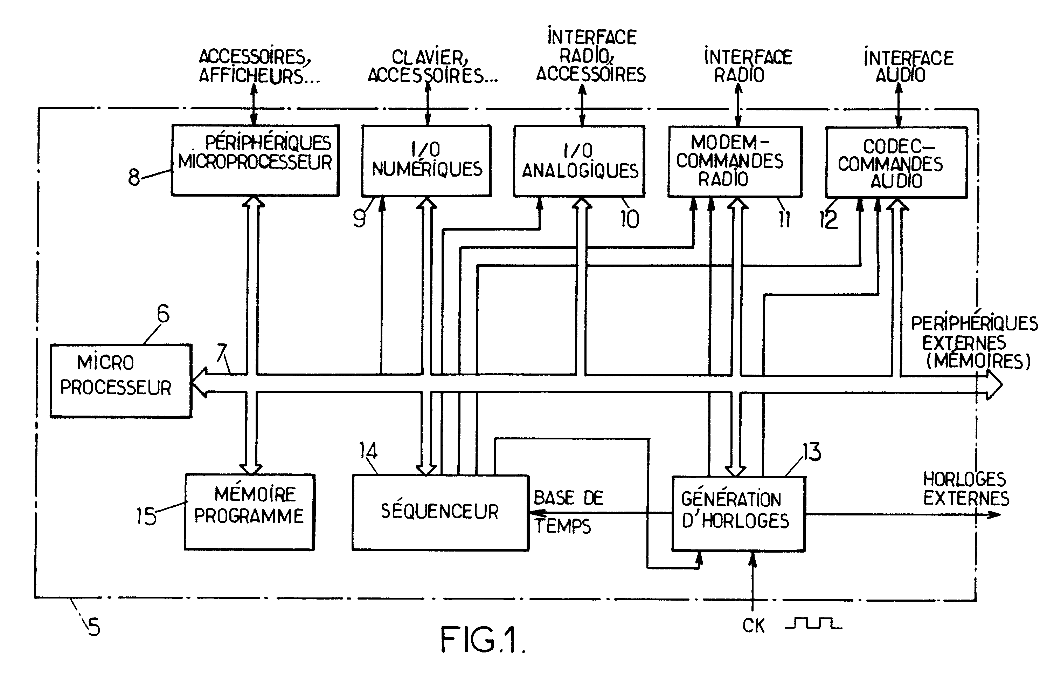

En référence à la figure 1, la partie logique d'un terminal de radiocommunication numérique est organisée autour d'un circuit intégré d'application spécifique (ASIC). Le circuit intégré 5 est par exemple réalisé en technologie CMOS. Dans l'exemple représenté sur la figure 1, il regroupe diverses fonctions de type logique du terminal. Le circuit 5 peut également assurer certaines fonctions de type analogique.

Le circuit intégré 5 comporte un coeur de processeur 6, dont le bus 7 est relié à un certain nombre d'unités 8-15 réalisées dans le circuit intégré 5.

Ces unités comprennent des unités périphériques 8-12 qui, dans l'exemple représenté, comportent :
- un ensemble 8 de périphériques du microprocesseur pour les échanges série avec les accessoires, afficheurs... ;
- un ensemble 9 d'entrées/sorties numériques pour la commande de l'interface homme-machine (clavier, afficheurs, accessoires simples...) ;
- un ensemble 10 d'entrées/sorties analogiques, permettant des mesures ou l'application de niveaux analogiques à des signaux échangés avec la radio ou des accessoires ;
- une unité radio 11 comprenant le modem du terminal et diverses fonctions de commande de l'interface radio ; et
- une unité audio 12 comprenant le codec audio et diverses fonctions de commande de l'interface audio.

Certains périphériques peuvent être externes au circuit intégré 5 (mémoires externes, co-processeur de traitement de signal coopérant avec les unités radio et audio 11, 12...). Ces périphériques externes sont connectés au bus du microprocesseur, accessible à l'extérieur du circuit.

Les programmes à exécuter par le séquenceur 14 sont stockés en mémoire programme RAM interne (unité 15), ou encore en mémoire externe.

L'unité de génération d'horloges 13 reçoit un signal d'horloge CK issu de l'horloge matérielle du terminal (par exemple un signal à 13 MHz), et construit un certain nombre de signaux d'horloge pour cadencer les diverses unités du circuit intégré 5, y compris la base de temps du séquenceur, ainsi que des unités externes au circuit intégré.

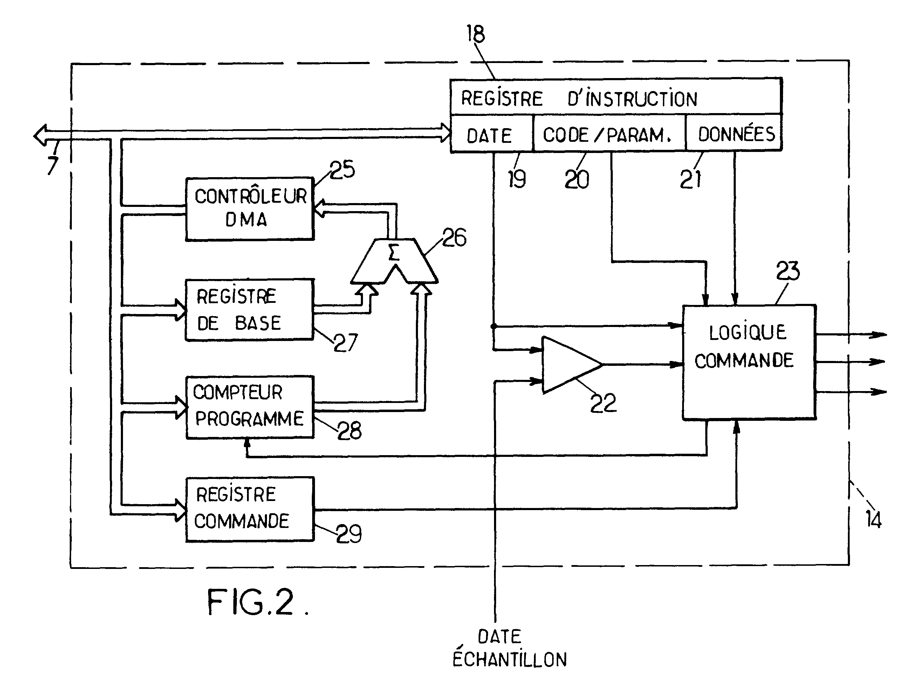

La structure du séquenceur 14 est illustrée par la figure 2. Le registre d'instruction 18 relié au bus 7 comporte trois champs : un champ de date 19 pour contenir une date d'exécution d'instruction ; un champ de code d'instruction 20 contenant un code identifiant l'instruction à exécuter et éventuellement des paramètres de cette instruction ; et un champ de données 21 pour contenir des données utiles à l'exécution de l'instruction.

Un comparateur 22 reçoit d'une part le contenu du champ de date 19 du registre d'instruction 18 et d'autre part une date d'échantillon fournie par l'unité 13 de génération d'horloge.

L'unité 13 définit les horloges de référence du système, par exemple à partir d'une horloge système de 16 kHz déduite du signal à 13 MHz issu de l'horloge matérielle. On considère le cas où le signal radio est formé avec des échantillons numériques à 16 kHz regroupés en trames de 20 ms elles-mêmes regroupées en supertrames de 4 s. L'horloge de 16 kHz alimente un compteur d'échantillons par trame FSC, et ce dernier alimente un compteur de trames FC. Dans le cas considéré, le comptage des échantillons par trame est modulo 320, et le comptage des trames est modulo 200 (ces deux valeurs sont programmables par le processeur 6). Avec les valeurs ci-dessus, le comptage des échantillons par trame requiert 9 bits, et celui des trames 8 bits. La date d'échantillon fournie au comparateur 22 par l'unité 13 de génération d'horloge est formée par les deux compteurs FC et FSC concaténés, qui sont comparés au contenu du champ 19 du registre d'instruction.

A titre d'exemple, le bus 7 ayant une largeur de 32 bits, le registre d'instructions 18 peut avoir 17 bits dans le champ de date 19, 7 bits (dont 4 bits de code et 3 bits de paramètres) dans le champ de code d'instruction 20, et 8 bits dans le champ de données 21.

Lorsque les deux dates examinées par le comparateur 22 coïncident, une logique de commande 23 du séquenceur déclenche l'action codée dans le champ de code 20 du registre d'instruction, en tenant compte le cas échéant des données incluses dans le champ 21. L'action identifiée dans ce décodage est alors exécutée dans l'unité périphérique concernée.

Pour le chargement des instructions dans le registre 18, le séquenceur 14 comprend un contrôleur 25 d'accès direct en mémoire (DMA). Le contrôleur 25 commande des accès dans la mémoire de programme 15 sur un canal DMA : le processeur 6 est mis en attente et le bus 7 est libéré pour permettre le chargement du registre d'instruction du séquenceur en quelques cycles. Cet accès à la mémoire de programme est effectué à une adresse d'instruction délivrée par un sommateur 26, qui reçoit d'une part une adresse de base fournie par un registre d'adresse de base 27, et d'autre part une adresse incrémentale fournie par un compteur de programme 28.

Le registre 27 et le compteur 28 sont accessibles en écriture par le microprocesseur 6 par l'intermédiaire du bus 7. Au moment d'initialiser le séquenceur 14, le processeur 6 écrit une adresse de base dans le registre 27, et une adresse incrémentale initiale dans le compteur 28. Ensuite, l'adresse de base contenue dans le registre 27 reste inchangée (jusqu'à une prochaine initialisation du séquenceur), et le compteur de programme 28 est incrémenté par la logique de commande 23 au moment où elle a procédé à l'action identifiée par le décodage du champ 20 du registre d'instruction. Ainsi, lorsque le traitement d'une instruction par le comparateur 22 et la logique de commande 23 est terminée, le compteur de programme 28 est incrémenté et le contrôleur DMA 25 va chercher l'instruction suivante dans la mémoire de programme 15 pour la charger dans le registre d'instructions 18. Si elle comporte la même date que l'instruction qui vient d'être exécutée, cette instruction suivante est exécutée immédiatement, ceci afin de permettre l'exécution de plusieurs actions à partir d'une même date.

Le séquenceur 14 comporte en outre un registre de commande 29 accessible en lecture et en écriture par le processeur 6 par l'intermédiaire du bus 7, et qui contient d'une part des paramètres d'initialisation de la logique de commande 23, et d'autre part des paramètres d'état du séquenceur, fournis par la logique 23. Le processeur 6 utilise le registre de commande 29 pour piloter le séquenceur et pour connaître son état.

A titre d'exemple, le registre 29 peut comporter 7 bits, à savoir 3 bits d'initialisation de la logique de commande 23 (un bit indiquant si l'horloge système est appliquée au séquenceur 14, un bit autorisant le séquenceur à adresser au processeur des interruptions en cas d'erreur dans les dates ou dans le décodage des instructions, et un bit autorisant le fonctionnement du séquenceur 14 en ignorant la date de trame FC, le comparateur 22 tenant alors compte uniquement du compteur d'échantillons par trame FSC), et d'autre part 4 bits indiquant l'état du séquenceur (un bit indiquant qu'une action longue du séquenceur est en cours d'exécution, un bit indiquant la coïncidence des dates et le passage par zéro de la date d'échantillon, un bit d'alarme pour cause de comparaison des dates et un bit d'alarme pour cause d'instruction inconnue).

A titre d'exemple, la logique de commande 23 peut être configurée pour piloter onze types d'action en fonction du code d'instruction de 4 bits, telles que présentées dans le Tableau I.

Les ports de sortie affectés par les actions CLEARBITPORT, SETBITPORT, et PULSEBITPORT sont des entrées/sorties numériques du circuit intégré, faisant partie de l'unité 9. Ces ports sont également accessibles par le processeur 6. En cas d'écriture simultanée dans le même port de sortie par le processeur 6 et par le séquenceur 14, c'est par exemple le séquenceur qui est prioritaire. En cas de programmations successives incompatibles, c'est la dernière programmation qui est prise en compte. Pour les instructions CLEARBITPORT, SETBITPORT et PULSEBITPORT, l'adresse du port est définie dans le champ de données 21 du registre d'instruction. Pour l'instruction SETANAPORT, les ports analogiques affectés appartiennent à l'unité 10, et le numéro du port est défini dans la zone de paramètres du champ de code 20, la valeur de la tension étant définie dans le champ de données 21.

Le positionnement des bits d'un registre des unités périphériques 9-13 faisant partie du circuit intégré 5 consiste à écrire un 1 ou un 0 (instructions SETBITREG et CLEARBITREG). Certains de ces registres sont également accessibles par le processeur 6, les conflits d'accès pouvant être gérés à l'aide de registres de contrôle auxiliaires prévus dans les unités 9-13. Le décodage de la zone de paramètres du champ de code 20 et du champ de données 21 permet d'accéder jusqu'à 128 registres de 16 bits chacun.

Les instructions ITSQ, STOP et JUMP sont déclenchées par la logique de commande 23 au niveau du séquenceur lui-même.

**TABLEAU I**

| *nom d'instruction* | *Code* | *Paramètres XXX :indéfini VVV : valeur* | *DESCRIPTION* |
|---|---|---|---|
| CLEARBITPORT | 0000 | XXX | Remise à 0 d'un port de sortie de l'ASIC. |
| SETBITPORT | 0001 | XXX | Positionnement à 1 d'un port de sortie de l'ASIC. |
| PULSEBITPORT | 0010 | XXX | Génération d'une impulsion de niveau inverse de l'état courant et de durée environ 1µs sur un port de sortie de l'ASIC. |
| CLEARBITREG | 0100 | VVV | Positionnement à 0 d'un bit d'un registre de l'ASIC. |
| SETBITREG | 0101 | VVV | Positionnement à 1 d'un bit d'un registre de l'ASIC. |
| SETANAPORT | 0110 | XVV | Génération d'une tension analogique sur un port analogique de l'ASIC. |
| DELAY | 1000 | XXX | Délai de latence entre l'exécution de deux actions programmées à une même date. Le délai, compris entre 0 ms et 63 ms, est défini dans le champ de données 21. |
| RADPRG | 1001 | VVV | Programmation d'un circuit radio dont le numéro est donné par la zone de paramètres du champ de code 20 et l'adresse des données en mémoire dans le champ de données 21. |
| ITSQ | 1011 | XXX | Génération d'une interruption sans condition du séquenceur vers le processeur 6. |
| STOP | 1100 | XXX | Arrêt du séquenceur. Son horloge est coupée. |
| JUMP | 1101 | VVV | Charge le contenu du compteur de programme 28 avec un offset d'adresse RAM fournie la zone de paramètres du champ de code 20 et le champ de données 21. |

## Revendications

1. Séquenceur pour déclencher des actions synchrones avec une horloge système dans un système électronique comprenant un processeur de gestion (6), une mémoire de programme (15) et des unités périphériques (9-13), caractérisé en ce qu'il comprend: un registre d'instruction (18) comportant un champ de date (19) pour contenir une date d'exécution d'instruction, un champ de code d'instruction (20) et un champ de données (21); des moyens (25-28) pour charger le registre d'instruction depuis la mémoire de programme par un canal DMA ; un comparateur (22) recevant d'une part une date courante obtenue à partir de l'horloge système et d'autre part la date d'exécution contenue dans le champ de date du registre d'instruction ; et une logique de commande (23) pour décoder les contenus des champs de code d'instruction et de données du registre d'instruction et déclencher au niveau des unités périphériques, sans intervention du processeur de gestion, les actions déduites de ce décodage au moment où le comparateur montre que la date d'exécution est atteinte par la date courante.

2. Séquenceur selon la revendication 1, comprenant en outre un registre de commande (29) accessible par le processeur de gestion (6) pour contenir des commandes d'initialisation du fonctionnement du séquenceur.

3. Séquenceur selon la revendication 2, dans lequel le registre de commande (29) a des emplacements contenant des informations sur l'état du séquenceur.

4. Séquenceur selon l'une quelconque des revendications 1 à 3, dans lequel les moyens de chargement du registre d'instruction comprennent un registre d'adresse de base (27) accessible en écriture par le processeur (6), un compteur d'adresse incrémentale (28) piloté par la logique de commande (23), un sommateur (26) recevant l'adresse de base et de l'adresse incrémentale, et un contrôleur de mode DMA (25) pour charger le registre d'instruction (18) avec une instruction datée lue dans la mémoire de programme (15) à une adresse délivrée par le sommateur.

5. Circuit intégré, comprenant un processeur de gestion (6), une mémoire de programme (15), des unités périphériques (9-12), des moyens (13) d'obtention d'une horloge système, et un séquenceur (14) selon l'une quelconque des revendications 1 à 4 pour déclencher des actions synchrones avec l'horloge système au niveau des unités périphériques.

6. Circuit intégré selon la revendication 5, dans lequel certaines des actions déduites du décodage sont déclenchées par la logique de commande (23) au niveau de registres des unités périphériques (9-12) qui sont également accessibles par le processeur de gestion (6).

7. Circuit intégré selon la revendication 5 ou 6, dans lequel certaines actions déduites du décodage sont déclenchées par la logique de commande (23) au niveau de ports d'entrée/sortie (9-10) du circuit intégré qui sont également accessibles par le processeur de gestion (6).

8. Circuit intégré selon l'une quelconque des revendications 5 à 7, dans lequel certaines actions déduites du décodage sont déclenchées par la logique de commande (23) au niveau du séquenceur (14).
